# EUROPEAN PATENT APPLICATION

(11) **EP 4 834 459 A1**
(43) Date of publication of application: **04.11.2026**
(21) Application number: 25172815.0
(22) Date of filing: 28.04.2025
(51) Int. Cl.: B01D 46/00, B01D 46/10, B01D 46/44, B01D 46/52

(54) **FILTER DEVICE FOR A VEHICLE**

(71) Applicant: MANN+HUMMEL Ventures Pte. Ltd., Singapore 139234 (SG)
(72) Inventor: THEBAULT, Eric, 71636 Ludwigsburg (DE); JUNGINGER, Bernd, 71636 Ludwigsburg (DE); WÖBER, Alexander, 71636 Ludwigsburg (DE); DOS SANTOS ASCENSAO, Macario Francisco, 71636 Ludwigsburg (DE)
(74) Representative: Mann + Hummel Intellectual Property

(57) **Abstract**

Dislcosed is a filter device for a vehicle, the filter device comprising: a filter element for filtering particles from unfiltered air; a frame for housing the filter element; and a sensor attached to the frame, the sensor configured to acquire sensor data indicative of a state of the frame; wherein the sensor data indicative of the state of the frame is correlatable with a loading status of the filter element. Further disclosed is a system for determining a loading parameter indicative of the loading status of the filter element, a method of providing a filter device for a vehicle, and a method for determining a loading parameter indicative of the loading status of the filter element.

## Description

### TECHNICAL FIELD

Various aspects of this disclosure relate to a filter device for a vehicle, a system for determining a loading parameter indicative of a loading status of the filter element, a method of providing the filter device for a vehicle, and a method for determining a loading parameter indicative of the loading status of the filter element.

### BACKGROUND ART

The following discussion of the background is intended to facilitate an understanding of the present disclosure only. It should be appreciated that the discussion is not an acknowledgment or admission that any of the material referred to was published, known, or is part of the common general knowledge of the person skilled in the art in any jurisdiction as of the priority date of the disclosure.

Conventional filter devices include filter elements for filtering fine dust particles in unfiltered air. Over time, the filter elements may become overloaded and may have to be replaced, for example, when the filter element reaches its maximum service life, or when a filtration efficiency of the filter element is below an acceptable threshold. If the overloaded filter element is not replaced, it may negatively affect the thermal management of the vehicle and may increase the vehicle's battery charging time.

Currently, a user is unable to determine the loading status of the filter element of such conventional filter devices, leading to ambiguity regarding the (i) change interval and/or (ii) replacement of the loaded filter element.

Accordingly, there is a need for an improved filter device for a vehicle, and a system comprising the improved filter device for determining the loading status of the filter element, that seeks to address at least one of the aforementioned issues.

### SUMMARY

The disclosure was conceptualized to provide an improved filter device for a vehicle, and/or a system comprising the improved filter device for determining the loading status of the filter element, in real-time or near real-time. To this end, the improved filter device comprises a sensor attached to a frame for housing the filter element, the sensor configured to acquire sensor data indicative of a state of the frame, which is correlatable with a loading status of the filter element. In various embodiments, the sensor may comprise a strain gauge which measures a frame parameter indicative of the state of the frame - specifically, an elongation parameter indicative of an elongation of the frame, and/or an elongation rate parameter indicative of an elongation rate of the frame - and correlates the frame parameter to a loading parameter indicative of the loading status of the filter element. Accordingly, the improved filter device and/or system comprising the improved filter device is able to determine, in real-time or near real-time, the loading status of the filter element, and to indicate to a user, the (i) change interval and/or (ii) replacement of a loaded filter element (which may be earlier than a maximum service lifetime of the filter element), and without adversely affecting the thermal management of the vehicle and/or battery charging time.

According to a first aspect of the disclosure, there is provided a filter device for a vehicle, the filter device comprising: a filter element for filtering particles from unfiltered air; a frame for housing the filter element; and a sensor attached to the frame, the sensor configured to acquire sensor data indicative of a state of the frame; wherein the sensor data indicative of the state of the frame is correlatable with a loading status of the filter element.

In various embodiments, the state of the frame comprises an elongation of the frame, and/or an elongation rate of the frame.

In various embodiments, the frame comprises: a frame border surrounding a perimeter of the filter element; at least one frame rib extending between a part of the frame border and another part of the frame border, wherein the sensor is attached to the at least one frame rib. In some embodiments, the at least one frame rib comprises a central frame rib extending between the part of the frame border and the another part of the frame border, to extend across a center portion of the filter element, and wherein the sensor is attached to the central frame rib.

In various embodiments, the at least one frame rib comprises a first frame rib and a second frame rib, and the sensor comprises a first sensor and a second sensor; wherein the first sensor is attached to the first frame rib, and the second sensor is attached to the second frame rib. In some embodiments, the sensor further comprises a third sensor and a fourth sensor, wherein the first sensor is attached to a first part of the first frame rib, and the third sensor is attached to a third part of the first frame rib; whereien the second sensor is attached to a second part of the second frame rib, and the fourth sensor is attached to a fourth part of the second frame rib.

In various embodiments, a distance between each frame rib of a plurality of frame ribs ranges from 5 cm to 10 cm, optionally, 7 cm to 8 cm.

In various embodiments, the frame comprises a plastic material, optionally, polypropylene.

In various embodiments, the sensor is attached to the frame proximal to a side for receiving the unfiltered air; and/or proximal to a counter side for releasing filtered air.

In various embodiments, the sensor comprises a strain gauge, and wherein the sensor optionally comprises a processor, the processor configured to: obtain the sensor data indicative of the state of the frame; determine based on the sensor data, a frame parameter indicative of the state of the frame; determine based on the frame parameter, the loading parameter indicative of the loading status of the filter element.

According to a second aspect of the disclosure, there is provided a system for determining a loading parameter indicative of the loading status of the filter element, the system comprising the filter device of the first aspect, the sensor of the filter device arranged in data communication with a processor, the processor configured to: obtain the sensor data indicative of the state of the frame; determine based on the sensor data, a frame parameter indicative of the state of the frame; determine based on the frame parameter, the loading parameter indicative of the loading status of the filter element.

In various embodiments, the frame parameter is directly proportional to the loading parameter.

In various embodiments, to determine the loading parameter, the processor is configured to: compare the frame parameter against each of a plurality of reference frame parameters indicative of a reference state of the frame, each reference frame parameter correlated to a reference loading parameter indicative of a reference loading status of the filter element; determine whether the frame parameter matches at least one reference frame parameter of the plurality of reference frame parameters; determine the loading parameter as the reference loading parameter correlated to the matched reference frame parameter of the plurality of reference frame parameters.

In various embodiments, the processor is further configured to: compare the loading parameter with a pre-determined baseline indicative of an allowable loading status of the filter element; determine whether the loading parameter is greater than or equal to the pre-determined baseline; trigger a first alert indicative of a first notification related to the allowable loading status of the filter element, in a positive determination that the loading parameter is greater than or equal to the pre-determined baseline.

In various embodiments, the processor is further configured to: compare the frame parameter with a pre-determined sensor threshold indicative of an operation limit of the sensor; determine whether the frame parameter is greater than or equal to the pre-determined sensor threshold; trigger a second alert indicative of a second notification related to the operation limit of the sensor, in a positive determination that the frame parameter is greater than or equal to the pre-determined sensor threshold.

In various embodiments, the frame parameter indicative of the state of the frame comprises: an elongation parameter indicative of an elongation of the frame; and/or an elongation rate parameter indicative of an elongation rate of the frame.

In various embodiments, the loading parameter indicative of the loading status of the filter element comprises: a filter weight parameter indicative of a loaded weight of the filter element; and/or a differential pressure parameter indicative of a pressure difference between a first pressure of the unfiltered air received on the side and a second pressure of the filtered air released from the counter side.

According to a third aspect of the disclosure, there is provided a method of providing a filter device for a vehicle, the method comprising: providing a filter element for filtering particles from unfiltered air; providing a frame for housing the filter element; attaching a sensor on to the frame, the sensor configured to acquire sensor data indicative of a state of the frame; wherein the sensor data indicative of the state of the frame is correlatable with a loading status of the filter element.

According to a fourth aspect of the disclosure, there is provided a method for determining a loading parameter indicative of the loading status of the filter element, the method comprising: providing the filter device of the first aspect of the disclosure; providing a processor arranged in data communication with the filter device, for executing the steps of: obtaining the sensor data indicative of the state of the frame; determining based on the sensor data, a frame parameter indicative of the state of the frame; determining based on the frame parameter, the loading parameter indicative of the loading status of the filter element.

In various embodiments, the frame parameter is directly proportional to the loading parameter.

In various embodiments, determining, the loading parameter comprises: comparing the frame parameter against each of a plurality of reference frame parameters indicative of a reference state of the frame, each reference frame parameter correlated to a reference loading parameter indicative of a reference loading status of the filter element; determining whether the frame parameter matches at least one reference frame parameter of the plurality of reference frame parameters; determining the loading parameter as the reference loading parameter correlated to the matched reference frame parameter of the plurality of reference frame parameters.

In various embodiments, the processor further executes the steps of: comparing the loading parameter with a pre-determined baseline indicative of an allowable loading status of the filter element; determining whether the loading parameter is greater than or equal to the pre-determined baseline; triggering a first alert indicative of a first notification related to the allowable loading status of the filter element, in a positive determination that the loading parameter is greater than or equal to the pre-determined baseline.

In various embodiments, the processor further executes the steps of: comparing the frame parameter with a pre-determined sensor threshold indicative of an operation limit of the sensor; determining whether the frame parameter is greater than or equal to the pre-determined sensor threshold; triggerring a second alert indicative of a second notification related to the operation limit of the sensor, in a positive determination that the frame parameter is greater than or equal to the pre-determined sensor threshold.

In various embodiments, the frame parameter indicative of the state of the frame comprises: an elongation parameter indicative of an elongation of the frame; and/or an elongation rate parameter indicative of an elongation rate of the frame.

In various embodiments, the loading parameter indicative of the loading status of the filter element comprises: a filter weight parameter indicative of a loaded weight of the filter element; and/or a differential pressure parameter indicative of a pressure difference between a first pressure of the unfiltered air received on the side and a second pressure of the filtered air released from the counter side.

According to a fifth aspect of the disclosure, there is provided a computer program product comprising instructions, which when executed by the processor, causes the processor to perform the method of the fourth aspect of the disclosure.

### BRIEF DESCRIPTION OF DRAWINGS

The drawings show:
- FIG. 1 shows a perspective view of an exemplary schematic illustration of a filter device 100 for a vehicle;
- FIG. 2 shows (A) the frame 120 across cross-section A-A of the exemplary filter device 100; (B) the frame 120 across cross-section B-B of the exemplary filter device 100; and (C) an enlarged view of a frame rib 124 circled in 'C' of the exemplary filter device 100;
- FIG. 3 shows another exemplary schematic illustration of the filter device 300 comprising a plurality of sensors 130;
- FIG. 4 shows an exemplary schematic illustration of a system 400 for determining a loading parameter 420 indicative of the loading status of the filter element 110;
- FIG. 5 shows a flowchart of an exemplary method 500 of providing a filter device for a vehicle;
- FIG. 6 shows a flowchart of an exemplary method 600 for determining a loading parameter indicative of the loading status of the filter element;
- FIG. 7 shows a pictorial representation of a frame 120 having a plurality of sensors 130, for measuring an elongation of the respective frame rib 124 when varying loads are placed on the frame 120;
- FIG. 8 shows the measured strain of each of the plurality of sensors 130, when the varying weights are placed on the frame 120;
- FIG. 9 shows (A) the test conditions of varying air flows on the frame 120 having the plurality of sensors 130, as shown in FIG. 7, and further including a first type of an unloaded filter element 110 housed therein; and (B) the measured strain of each of the plurality of sensors 130, at the varying air flows;
- FIG. 10 shows (A) the test conditions of varying air flows on the frame 120 having the plurality of sensors 130, as shown in FIG. 7, and further including a second type of an unloaded filter element 110 housed therein; (B) the measured strain of each of the plurality of sensors 130, at the varying air flows, of the unloaded filter element 110;
- FIG. 11 shows (A) the test conditions of varying air flows on the frame 120 having the plurality of sensors 130, as shown in FIG. 7, and further including the second type of a loaded filter element 110 housed therein (B) the measured strain of each of the plurality of sensors 130, at the varying air flows, of the loaded filter element 110; and
- FIG. 12 shows a comparison of the measured strain from sensor 130 placed at positions #1 and #3, as shown in FIG. 7, between an unloaded filter element 110 and a loaded filter element 110.

### DETAILED DESCRIPTION

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements. As used herein, the term "and/or" includes any and all combinations of one or more of the associated listed items.

While terms as "first," "second," etc., may be used to describe various elements, such terms are used only to distinguish one element from another for purposes of clarity, and do not define corresponding elements, for example, an order and/or significance of the elements. Without departing a scope of rights of the specification, a first element may be referred to as a second element, and similarly, the second element may be referred to as the first element.

In the context of various embodiments, the term "configured to" as used herein, may refer to the sensor or processor being arranged or ordered to be used and function in a certain manner. The term configured to may also mean, being operable to, being arranged to, being provided or adapted to, function in a certain manner.

In the context of various embodiments, the term "substantially" as used herein, may refer to a large extent, for example, at least 80 % of indicated portion.

In the context of various embodiments, the indicated values, or limit values of the indicated ranges provided below, with regard to the term "distance", may refer to an average of said term. For example, the indicated values, or limit values of the ranges, for the term "distance", may refer to the average value, or average limit value of the range.

Throughout the description, the term "vehicle" as used herein, may refer to a motor-powered vehicle, for example having two, three, four or more wheels. Examples of the vehicle include a passenger car, a truck, a bus, a lorry, an agriculture vehicle, or a rail vehicle, for example, a locomotive. In various embodiments, the vehicle may be an electric vehicle or a hybrid (internal combustion engine and electrical) vehicle. In various other embodiments, the vehicle may be an internal combustion engine vehicle, i.e., non-hybrid. Vehicles may further include autonomous vehicles. It is contemplated that the vehicle may include an aircraft or a water vehicle.

Throughout the description, the term "unfiltered air" as used herein, may refer to air, e.g. atmospheric air comprising particles suspended therein which may pollute the environment and/or may be harmful to a user. The particles may be fine dust particles generated by industrial pollution or traffic. Accordingly, the term "filtered air" as used herein, may refer to air which has been filtered via a filter element to reduce the number and concentration of particles suspended therein. For example, the filtered air may have a reduced concentration or number of fine dust particles, relative to the unfiltered air.

Throughout the description, the term "filter element" as used herein, may refer to an element for filtering particles in the unfiltered air, which may be generated by industrial pollution or traffic. The filter element may include a particulate filter for filtering fine dust particles suspended in air, for example, to filter out airborne particulate matter (PM) particles of varying particle sizes, such as 10 microns or less (PM10) particles, 2.5 microns or less (PM2.5) particles, or 1 micron or less (PM1) particles. **In** various embodiments, the filter element may be a fine dust filter. Within the context of the disclosure, the filter element may form part of the filter device for filtering fine dust particles from unfiltered air which may pollute the environment. **In** some embodiments, the filter element may be a filter bellows comprising a pleated filter medium having varying pleat geometry. In some embodiments, the filter element may have a mount integrally formed with the filter element to support the filter element, for example, to maintain the shape of the bellows. In some other embodiments, the filter element may not have a mount integrally formed therewith, and may be assembled in or inserted into a frame.

Throughout the description, the phrase "a side for receiving unfiltered air", as used herein, may refer to a part of the filter element that the unfiltered air impinges on, and may also be known as the "upstream side" of the filter element. The unfiltered air may be filtered by the filter element, and the filtered air may be released on a counter side, e.g. an opposing side of the filter element or the "downstream side" of the filter element. In other words, the unfiltered air may be received on a side of the filter element, and the filtered air may be released on the counter side, e.g. opposing side, of the filter element.

Throughout the description, the term "frame" as used herein, may refer to a holding support on which the filter element is assembled on, or inserted to. **In** various embodiments, the frame may be separate to the filter element and may be used to hold the filter element for installation in a vehicle. Alternatively, or additionally, the filter element may comprise a mount integrally formed therewith, and in some embodiments, the filter element comprising the integrally formed mount may be assembled on, or inserted on to the frame. Accordingly, the term, "house" or "housing" as used herein, may refer to the provision of the holding support for the filter element by the frame.

Throughout the description, the term "data" may be understood to include information in any suitable analog or digital form, for example, provided as a file, a portion of a file, a set of files, a signal or stream, a portion of a signal or stream, a set of signals or streams, and the like. The term data, however, is not limited to the aforementioned examples and may take various forms and represent any information as understood in the art. Accordingly, the term "sensor data" may be understood to include any data measured by the sensor, such as data indicative of a state of the frame.

Throughout the description, the term "state of the frame" as used herein, may refer to a physical state or condition of at least, a part of the frame, at a specific time. In various embodiments, the data indicative of the state of the frame may be measured under predetermined conditions, for example, when the vehicle is in a stationary position, and with a fixed active grille shutter position and fixed radiator fan, e.g. ventilator operation setting.

Throughout the description, the term "obtain" as used herein, refers to the processor which actively obtains the inputs, or passively receives inputs from one or more sensors or data source. The term obtain may also refer to a processor, which receives or obtains inputs from a communication interface, e.g. a user interface. The processor may also receive or obtain the inputs via a memory, a register, and/or an analog-to-digital port.

Throughout the description, the term "processor" as used herein, includes one or more electrical circuits capable of processing data, i.e. processing circuits. A processor may include analog circuits or components, digital circuits or components, or hybrid circuits or components. Any other kind of implementation of the respective functions which will be described in more detail below may also be understood as a "circuit" in accordance with an alternative embodiment. A digital circuit may be understood as any kind of a logic implementing entity, which may be special purpose circuitry or a processor executing software stored in a memory, or a firmware.

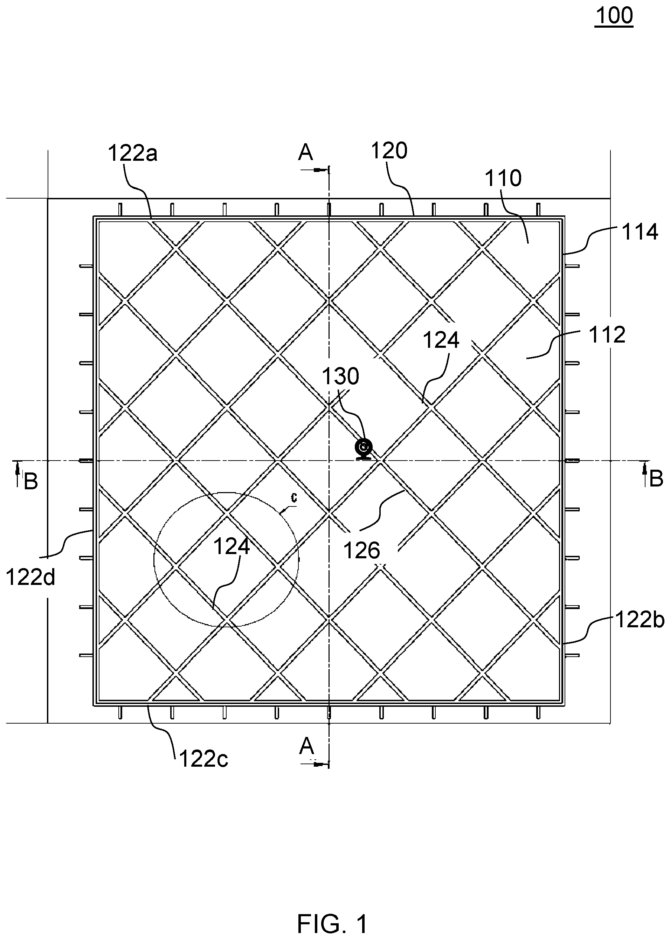

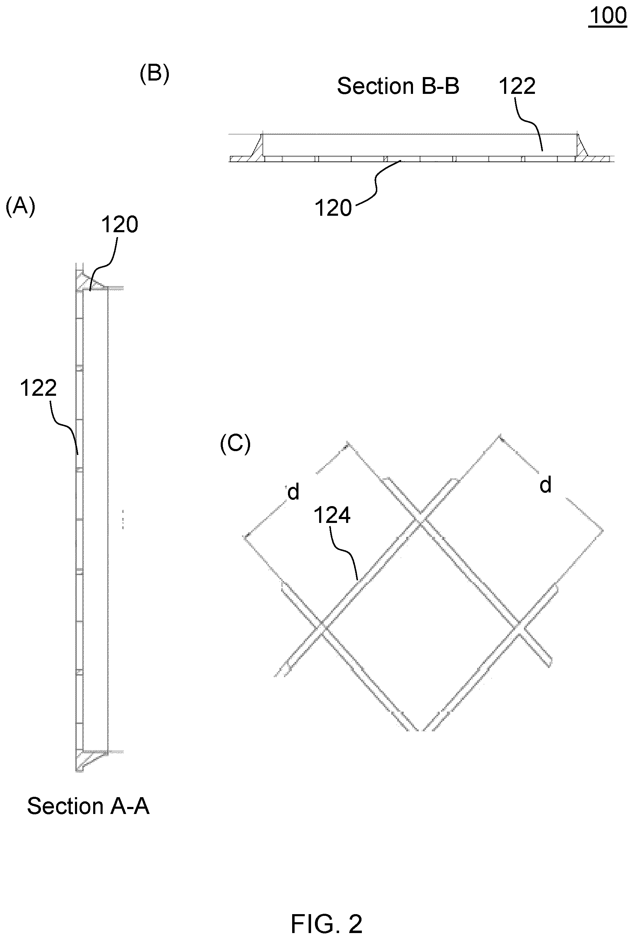

FIG. 1 shows a perspective view of an exemplary schematic illustration of a filter device 100 for a vehicle. FIG. 2 shows (A) the frame 120 across cross-section A-A of the exemplary filter device 100; (B) the frame 120 across cross-section B-B of the exemplary filter device 100; and (C) an enlarged view of a frame rib 124 circled in 'C' of the exemplary filter device 100.

In various embodiments, the filter device 100 may be suitable for use with a vehicle, and may be installed, positioned or integrated on the vehicle for example, at suitable locations on the vehicle. In some embodiments, the filter device 100 may be installed, positioned or integrated in the front-end of the vehicle, for example, the front of the chassis of the vehicle.

Referring to FIG. 1, the filter device 100 comprises a filter element 110 for filtering particles, e.g. fine dust particles, from unfiltered air, e.g. atmospheric air. **In** various embodiments, the filter element 110 may comprise a side 112, e.g. upstream side, for receiving the unfiltered air having the fine dust particles suspended therein. The filter element 110 may filter the unfiltered air, to reduce the concentration and number of particles suspended therein, and may release the filtered air on a counter side 114, e.g. downstream or opposing side. In various embodiments, the filter element 110 may comprise a pleated filter medium having varying dimensions and/or pleat geometry adapted to the use and type of the filter element 110. Alternatively, it is contemplated that the filter element 110 may not comprise a pleated filter medium.

The filter device 100 comprises a frame 120 for housing the filter element 110. In various embodiments, the filter element 110 may be inserted into, or assembled into the frame 120. In some embodiments, a mount (not shown) may be integrally formed with the filter element 110, and the filter element 110 itself may include the mount. In some other embodiments, the filter element 110 comprising the mount may be assembled into the frame 120 for housing the filter element 110. In various embodiments, the frame 120 may be in the shape of a square (as shown in FIG. 1) or a rectangle. Alternatively, the frame 120 may be in any suitable shape suitable for housing the filter element 110.

Referring to FIGS. 1 to 2C, the frame 120 may comprise a frame border 122 which surrounds a perimeter of the filter element 110. The frame border 122 may surround the borders or sides of the filter element 110. In FIG. 1, the frame border 122 may comprise a first border 122a, second border 122b, third border 122c and fourth border 122d.

The frame 120 may further comprise at least one frame rib 124, i.e. grid, extending between a part, e.g. first border 122a or third border 122c, of the frame border 122 and another part, e.g. second border 122b or fourth border 122d, of the frame border 122, and may extend across a surface area or portion of the filter element 110 housed therein. In various embodiments, the frame 120 may comprise a plurality of frame ribs 124, each frame rib 124 extending across a surface area or portion of the filter element 110. In some embodiments, the plurality of frame ribs 124 may comprise a central frame rib 126 which extends between the part, e.g. the side, of the frame border 122 and another part, e.g. side of the frame border 122, to extend substantially, across a center portion of the filter element 110. For example, as shown in FIG. 1, the central frame rib 126 may extend substantially across, a middle or diagonal midline portion of the filter element 110. In an embodiment, the central frame rib 126 may comprise two or more frame ribs 124 which extend substantially across, the center portion of the filter element 110.

Each frame rib 124 may be substantially equally spaced apart, across the surface area of the filter element 110. In some embodiments, a distance (d) between each frame rib 124 of the plurality of frame ribs 124 may range from 5 cm to 10 cm, optionally, 7 cm to 8 cm (see FIG. 2C). Alternatively, in some other embodiments, a distance between a frame rib 124 and another frame rib 124 may vary (not shown), across the surface area of the filter element 110. For example, a distance (d) between a first frame rib and a second frame rib may be 7 cm to 8 cm, and a distance (d) between the first frame rib and a third frame rib may be smaller or greater than 7 cm to 8 cm.

The frame 120 may comprise a material that may be flexible and durable, e.g. having the ability to withstand fatigue and heat when installed in the vehicle. In some embodiments, the frame 120 may comprise a plastic material, such as but not limited to polypropylene. In some other embodiments, the frame 120 may comprise polyamide, or may be formed from or made of polyamide, or any other material suitable for housing the filter element 110, and which is flexible and durable. The polyamide material may or may not be reinforced, for example, with glass fibers.

Referring to FIG. 1, the filter device 100 includes a sensor 130 attached to the frame 120. In various embodiments, the sensor 130 may be attached to at least one frame rib 124 of the frame. In some embodiments, the sensor 130 may be positioned on the central frame rib 126 as in this configuration, sensor data 402 which is acquired from the central frame rib 126 which extends across the center portion of the filter element 110, may have a higher accuracy. It is contemplated that the sensor 130 may be attached to the frame border 122, depending on the flexural modulus of the frame border 122.

In various embodiments, the sensor 130 may be attached to the frame 120 proximal to the side 112, e.g. upstream side for receiving the unfiltered air. Alternatively, or additionally, the sensor 130 may be attached to the frame 120 proximal to the counter side 114, e.g. downstream side for releasing the filtered air.

The sensor 130 may be suitable for acquiring, e.g. measuring sensor data 402 indicative of a state of the frame 120. The state of the frame 120 may refer to a physical state of a part of the frame 120, e.g. frame rib 124 or central frame rib 126 that the sensor 130 is attached thereto, and may in various embodiments, refer to a strain or deformation of the part of the frame 120. The sensor 130 may therefore be suitable for measuring the strain of the frame 120 and may in some embodiments comprise a strain gauge. It is contemplated that the sensor 130 may comprise any device suitable for measuring the deformation of a part of the frame 120.

In various embodiments, the state of the frame 120 may refer to an elongation of the frame rib 124 or central frame rib 126 that the sensor 130 is attached thereto. The elongation of the frame rib 124 or central frame rib 126 may refer to a difference in a length of the frame rib 124 or central frame rib 126 at the time the sensor data 402 is acquired, and the original length of the frame rib 124 or central frame rib 126. In various other embodiments, the state of the frame 120 may refer to an elongation rate of the frame rib 124 or central frame rib 126 the sensor 130 is attached thereto. Accordingly, the sensor data 402 may comprise at least one measurement of the length of the frame rib 124 or central frame rib 126. It is contemplated that the state of the frame 120 may include further derivatives, e.g. second, third, fourth etc. derivatives if the elongation of the frame rib 124 or central frame rib 126 that the sensor 130 is attached to.

The sensor data 402 indicative of the state of the frame 120 is correlatable with a loading status of the filter element 110, and it was found that the state of the frame 120 may be related to, e.g. associated with, linked, to the loading status of the filter element 110. The loading status as used herein, may refer to the total amount of particulate matter collected by the filter element 110. In various embodiments, the loading status of the filter element 110 may refer to a loaded weight of the filter element 110, i.e. a physical weight of the filter element 110 having the fine dust particles trapped in the filter medium. In various other embodiments, the loading status of the filter element 110 may refer to a pressure difference between a pressure of the unfiltered air received on the side 112 and a second pressure of the filtered air released from the counter side 114. In other words, the elongation or elongation rate of the frame rib 124 or central frame rib 126 may be related to, e.g. associated with, linked, to the loading of the filter element 110, and the loading status of the filter element 110 may be determined based on the acquired sensor data 402. It is contemplated that the loading status may also include: a remaining useful life; a loading rate; a leakage rate; and a used life of the filter element 110.

In various embodiments, the sensor data 402 for may be acquired when the vehicle is in a stationary position, i.e. not moving, and having a fixed active grille shutter position and fixed radiator fan, i.e. ventilator operating speed. In some embodiments, an external temperature and humidity rate during the time at which the sensor data 402 is acquired may also be measured, and the sensor data 402 indicative of the state of the frame 120 may be adjusted accordingly. For example, the external temperature and humidity rate may affect the measured elongation and/or elongation rate of the frame rib 124 and/or central frame rib 126 the sensor 130 is attached to.

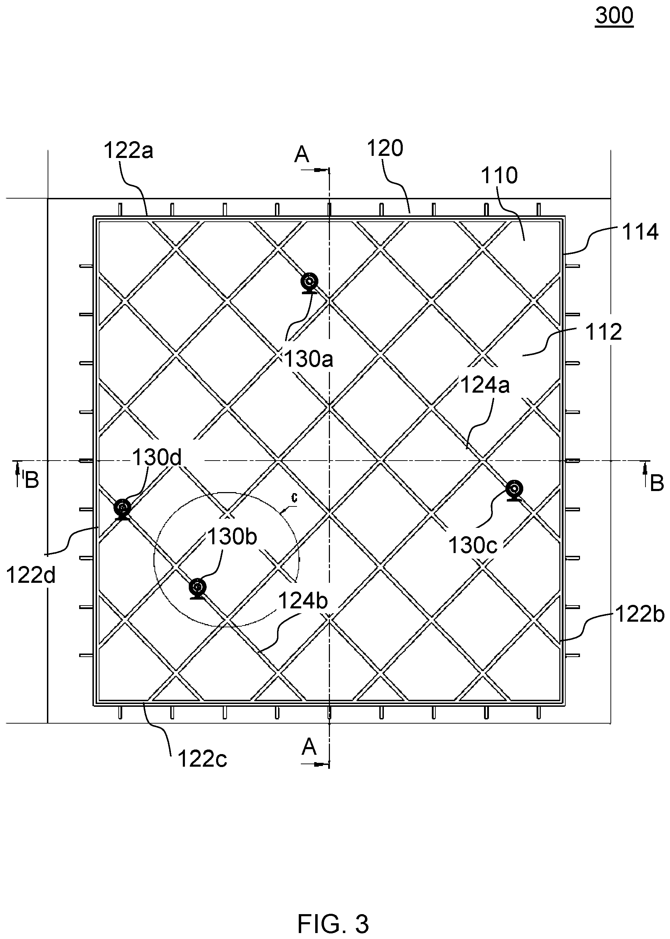

FIG. 3 shows another exemplary schematic illustration of the filter device 300 comprising a plurality of sensors 130.

Referring to FIG. 3, the plurality of frame ribs 124 may comprise a first frame rib 124a extending between a first border 122a and a second border 122b of the frame border 122, and a second frame rib 124b extending between a third border 122c and a fourth border 122d of the frame border 122. The first frame ribs 124a and second frame rib 124b may therefore extend across different portions of the filter element 110 housed therein. The sensor 130 may comprise a plurality of sensors 130, and a first sensor 130a may be attached to a first part of the first frame rib 124a, and the second sensor 124b may be attached to a first part of the second frame rib 124b. In other words, the first 130a and second 130b sensors may be attached to different portions of the frame 120 (and across the surface area of the filter element 110), to acquire sensor data 402 from said different portions of the frame 120.

The plurality of sensors 130 may further include a third sensor 130c attached to a second part of the first frame rib 124a, and a fourth sensor 130d attached to a second part of the second frame rib 124b. Accordingly, the third sensor 130c and the fourth sensor 130d may be attached on different parts along a length of the first frame rib 124a, and the second frame rib 124b, respectively. By attaching a plurality of sensors 130 on different parts of a respective frame ribs 124 and/or attaching the plurality of sensor 130 on different frame ribs 124, additional sensor data 402 indicative of the state of the respective frame rib 124 and/or respective part of the frame rib 124, may be acquired and the loading status of the filter element may be determined with higher accuracy.

While FIG. 3 has been described with respect to the first 124a and second 124b frame ribs, and the first 130a, second 130b, third 130c, and fourth 130d sensors, the disclosure is not limited thereto and the plurality of frame ribs 124 may comprise more than two frame ribs, and the sensors 130 may comprise more than four sensors attached to various parts of the plurality of frame ribs 124.

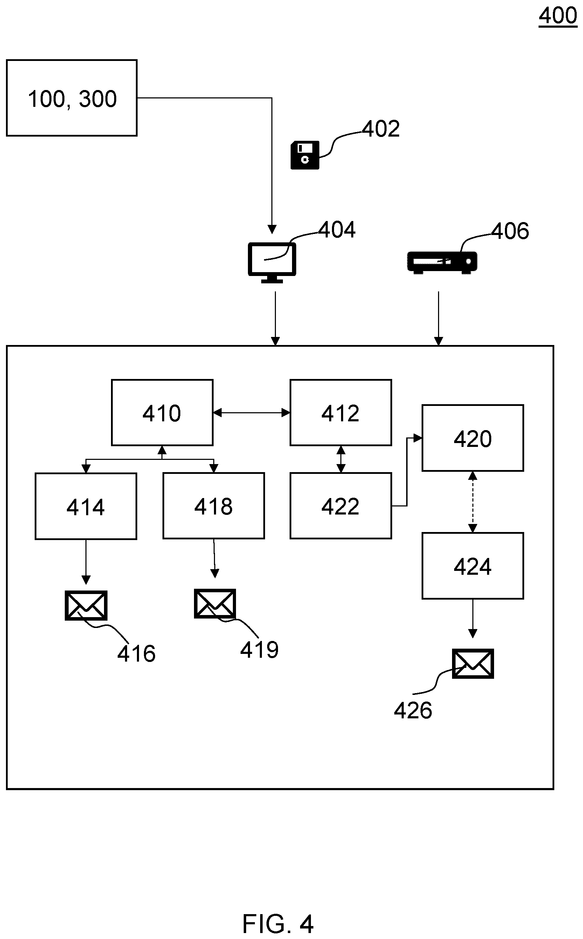

FIG. 4 shows an exemplary schematic illustration of a system 400 for determining a loading parameter 420 indicative of the loading status of the filter element 110. The system 400 may comprise the filter device 100, 300 discussed with reference to FIGS. 1 to 3. In various embodiments, the system 400 may be a control system 400 for controlling an operation of the filter device 100, in addition to determining the loading parameter 420 indicative of the loading status of the filter element 110.

The filter device 100, 300 may be arranged in data communication with a processor 404. In various embodiments, the sensor 130 may be configured to be in signal or data communication with the processor 404 and may communicate wirelessly with the processor 404 in accordance with a predefined wireless protocol. Alternatively, the sensor 130 may be configured to communicate with the processor 404 using wired protocols.

The processor 404 may be configured to: obtain the sensor data 402 indicative of the state of the frame 120; determine based on the sensor data 402, a frame parameter 410 indicative of the state of the frame 120; and determine based on the frame parameter 410, the loading parameter 420 indicative of the loading status of the filter element.

In various embodiments, the frame parameter 410 may comprise: an elongation parameter indicative of an elongation of the frame 120. The elongation parameter may comprise a value or range of values indicative of the difference between a length of the frame rib 124 and/or central frame rib 126 and the original length of the respective frame rib 124 and/or central frame rib 126. In various other embodiments, the frame parameter 410 may comprise an elongation rate parameter indicative of an elongation rate of the frame 120. The elongation rate parameter may comprise a value or range of values indicative of the difference between a length of the frame rib 124 and/or central frame rib 126 and the original length of the respective frame rib 124 and/or central frame rib 126, over a duration in which the measurements, i.e. sensor data 402, is acquired. **It** is further contemplated that the frame parameter 410 may comprise a parameter indicative of a deformation, e.g. change in the shape and/or size of the frame 120.

In various embodiments, the loading parameter 420 may comprise: a filter weight parameter indicative of a loaded weight of the filter element 110. The filter weight parameter may comprise a value or range of values indicative of a loaded weight of the filter element 110. For example, a weight of the filter element 110 may increase due to the loading, i.e. accumulation of the filtered fine dust particles that are trapped in the filter medium of the filter element 110. In various other embodiments, the loading parameter 420 may comprise: a differential pressure parameter indicative of a pressure difference between a first pressure of the unfiltered air received on the side 112 of the filter element 110 and a second pressure of the filtered air released from the counter side 114 of the filter element 110. The differential pressure parameter may comprise a value or range of values of the difference in pressure between the unfiltered air impinging on the side 112 and the filtered air being released on the counter side 114. For example, there may an unwanted increase in the difference in pressure due to the loading, i.e. accumulation of the filtered fine dust particles. It is further contemplated that the loading parameter 420 may comprise: a parameter of a remaining useful life of the filter element 110; a parameter of the loading rate of the filter element 110; a parameter of the leakage rate of a filter element 110; and a parameter of a used life of the filter element 110.

In various embodiments, the frame parameter 410 may be directly proportional to the loading parameter 420. That is, an increase in the value or range of values of the frame parameter 410, was found to correlate to and be directly proportional to an increase in the value or range of values of the loading parameter 420. For example, an increase in the elongation parameter or elongation rate parameter, e.g. frame parameter 410 was found to be directly proportional, i.e. directly linked to an increase in the filter weight parameter and/or differential pressure parameter, e.g. loading parameter 420, which may be indicative of an increased loading status of the filter element 110. In other words, the state of the frame 120 was found to be correlated to and indicative of a loading status of the filter element 110. As such, a user may acquire sensor data 402 indicative of the state of the frame 120 and may infer, from said sensor data 402, the loading status of the filter element 110 to accordingly obtain information on a (i) change interval and/or (ii) replacement of a loaded filter element 110.

Referring to FIG. 3, the system 400 may further comprise a storage device 406, e.g. memory, configured to store a plurality of reference frame parameter 412 indicative of a reference state of the frame 120. Each reference frame parameter 412 may be correlated to a reference loading parameter 422 indicative of a reference loading status of the filter element 110. In various embodiments, the storage device 406 may store the plurality of reference frame parameters 412 as a look-up table, e.g. reference or mapping table wherein a reference frame parameter 412 is correlated to, i.e. associated with or related to a reference loading parameter 422. For example, in the look-up table, a value of a reference frame parameter 412, e.g. reference elongation parameter or elongation rate parameter, may be directly mapped and linked to a value of a reference loading parameter 422, e.g. reference filter weight parameter and/or differential pressure parameter.

To determine the loading parameter 420, the processor 404 may be configured to: compare the frame parameter 410 determined based on the sensor data 402, against each of the plurality of reference frame parameters 412, and determine whether the frame parameter 410 matches at least one reference frame parameter 412 of the plurality of reference frame parameters. In various embodiments, the processor 404 may map the determined frame parameter 410 to each of the plurality of reference frame parameter 412 to determine if a value or range of values of the frame parameter 410 is equal to, i.e. matches at least one of the reference frame parameters 412 among the plurality of reference frame parameter 412.

The processor 404 may determine the loading parameter 420, as the reference loading parameter 422 that is correlated to the matched reference frame parameter 412 of the plurality of reference frame parameters 412. In other words, the loaded parameter 420, which may comprise a value or range of values, may be determined based on a match of the determined frame parameter 410 with the reference frame parameter 412, and the mapping of said reference frame parameter 412 to the reference loading parameter 422.

Referring to FIG. 3, the processor 404 may be further configured to: compare the loading parameter 420 with a pre-determined baseline 424 indicative of an allowable loading status of the filter element 110. The pre-determined baseline 424 may be a threshold indicative a tolerable and allowable loading of the filter element 110 before the filter element 110 needs to be replaced. In some embodiments, the pre-determined baseline 424 may be a maximum loading, e.g. maximum weight and/or maximum differential pressure, of the filter element 110.

The processor 404 may be further configured to: determine whether the loading parameter 420 is greater than or equal to the pre-determined baseline 424. The processor 404 may, determine whether the value or range of values of the loading parameter 420 is greater than or equal to the value of the pre-determined baseline 424. The processor 404 may be configured to further trigger, a first alert 426 indicative of a first notification related to the allowable loading status of the filter element 110, in a positive determination that the loading parameter 410 is greater than or equal to the pre-determined baseline 424. The first notification may therefore be a notification to indicate and alert the user of a (i) change interval and/or that (ii) the filter element 110 may have to be replaced.

Referring to FIG. 3, the processor 404 may be further configured to: compare the frame parameter 410 with a pre-determined sensor threshold 414 indicative of an operation limit of the sensor 130. The pre-determined sensor threshold 414 may be a threshold indicative of the operation limit, e.g. range of conditions that the sensor 130 is able to function.

The processor 404 may be further configured to: determine whether the frame parameter 410 is greater than or equal to the pre-determined sensor threshold 414. For example, the processor 404 may determine whether the value or range of values of the frame parameter 410 is greater than or equal to the value of the pre-determined sensor threshold 414. The processor 404 may be further configured to: trigger a second alert 416 indicative of a second notification related to the operation limit of the sensor 130, in a positive determination that the frame parameter 410 is greater than or equal to the pre-determined sensor threshold 414. The second notification may therefore be a notification to indicate and alert the user of a possible malfunction or incorrect placement of the sensor 130, and/or used lifetime of the sensor 130.

Referring to FIG. 3, the processor 404 may be further configured to: compare the frame parameter 410 with a pre-determined frame threshold 418 indicative of an elongation limit of the frame 120. The pre-determined frame threshold 418 may be a threshold indicative of a maximum elongation of a frame rib 124 and/or the central frame rib 126 of the frame 120, which may be related to the use of the filter element 110 for an application. In various embodiments, the pre-determined frame threshold 418 may also be dependent on the type of the filter element 110, and an allowable differential pressure for said application.

The processor 404 may be further configured to: determine whether the frame parameter 410 is greater than or equal to the pre-determined frame threshold 418. For example, the processor 404 may determine whether a value or range of values of the frame parameter 410 is greater than or equal to the value of the pre-determined frame threshold 418; and may trigger a third alert 419 indicative of a third notification related to the maximum elongation of the frame 120, in a positive determination that the frame parameter 410 is greater than or equal to the pre-determined frame threshold 418. The third notification may therefore be a notification to indicate and alert the user that the frame 120 has reached its operation limit. The third notification may also indicate to the user, that further sensor data 402 using said frame 120 may no longer be accurate since the frame 120 has reached its operation limit.

Accordingly, the system 400 for determining the loading parameter 420 indicative of the loading status of the filter element 110, may utilize a change in the state of the frame 120, e.g. frame parameter 420 to provide information, in real-time or near real-time, of the loading status of the filter element 110. The loading status of the filter element 110 may be useful to indicate to the user of (i) a change interval and/or (ii) a replacement of the loaded filter element 110.

According to another aspect of the disclosure and with reference to FIGS. 1 to 3, the sensor 130 may optionally comprises a processor (not shown). The processor may be configured to: obtain the sensor data 402 indicative of the state of the frame 120; determine, based on the sensor data 402, a frame parameter 410 indicative of the state of the frame 120; determine based on the frame parameter 410, the loading parameter 420 indicative of the loading status of the filter element 110. The determination of the frame parameter 410 and the loading parameter 420 have been discussed with reference to the system 400 of FIG. 4, and repeated descriptions are omitted for brevity.

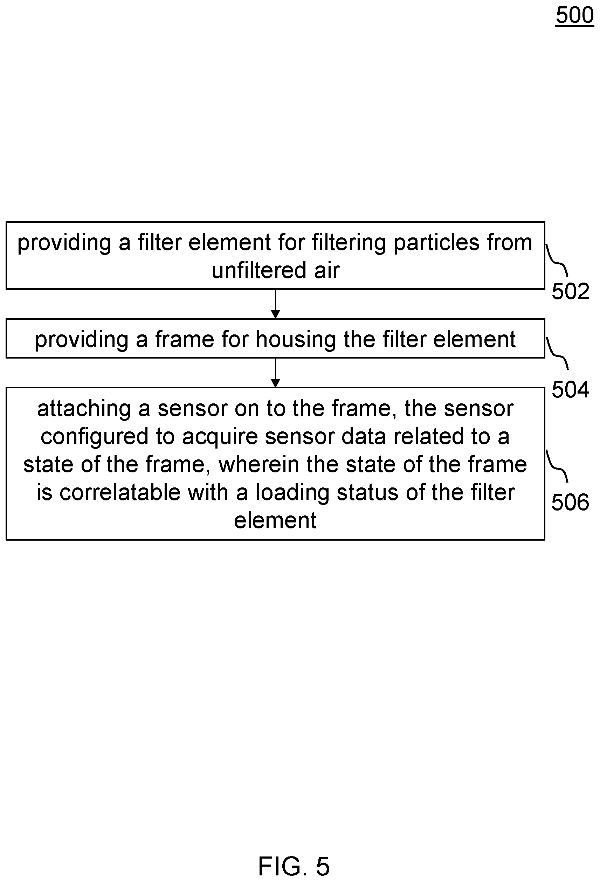

FIG. 5 shows a flowchart of an exemplary method 500 of providing a filter device for a vehicle. The filter device may refer to filter device 100, 300 described with reference to FIGS. 1 to 3.

Method 500 may include the steps of: providing a filter element for filtering particles from unfiltered air (step 502); providing a frame for housing the filter element (step 504); attaching a sensor on to the frame, the sensor configured to acquire sensor data indicative of a state of the frame, wherein the sensor data indicative of the state of the frame is correlatable with a loading status of the filter element (step 506).

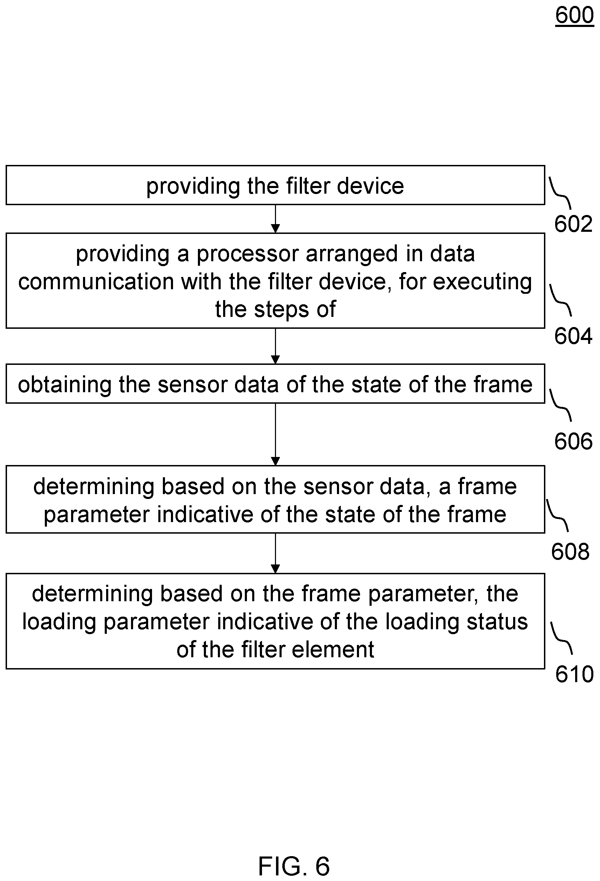

FIG. 6 shows a flowchart of an exemplary method 600 for determining a loading parameter indicative of the loading status of the filter element.

Method 600 may include the steps of: providing the filter device (step 602); providing, a processor arranged in data communication with the filter device (step 604), for executing the steps of: obtaining the sensor data indicative of the state of the frame (step 606); determining based on the sensor data, a frame parameter indicative of the state of the frame (step 608); and determining based on the frame parameter, the loading parameter indicative of the loading status of the filter element (step 610). The filter device may refer to filter device 100, 300 described with reference to FIGS. 1 to 3.

In various embodiments, the frame parameter is directly proportional to the loading parameter.

In various embodiments, determining, the loading parameter comprises: comparing the frame parameter against each of a plurality of reference frame parameters indicative of a reference state of the frame, each reference frame parameter correlated to a reference loading parameter indicative of a reference loading status of the filter element; determining whether the frame parameter matches at least one reference frame parameter of the plurality of reference frame parameters; and determine the loading parameter as the reference loading parameter correlated to the matched reference frame parameter of the plurality of reference frame parameters.

In various embodiments, the processor further executes the steps of: comparing the loading parameter with a pre-determined baseline indicative of an allowable loading status of the filter element; determining whether the loading parameter is greater than or equal to the pre-determined baseline; triggering a first alert indicative of a first notification related to the allowable loading status of the filter element, in a positive determination that the loading parameter is greater than or equal to the pre-determined baseline.

In various embodiments, the processor further executes the steps of: comparing the frame parameter with a pre-determined sensor threshold indicative of an operation limit of the sensor; determining whether the frame parameter is greater than or equal to the pre-determined sensor threshold; triggering a second alert indicative of a second notification related to the operation limit of the sensor, in a positive determination that the frame parameter is greater than or equal to the pre-determined sensor threshold.

In various embodiments, the frame parameter indicative of the state of the frame comprises: an elongation parameter indicative of an elongation of the frame; and/or an elongation rate parameter indicative of an elongation rate of the frame.

In various embodiments, the loading parameter indicative of the loading status of the filter element comprises: a filter weight parameter indicative of a loaded weight of the filter element; and/or a differential pressure parameter indicative of a pressure difference between a first pressure of the unfiltered air received on the side and a second pressure of the filtered air released from the counter side.

According to another aspect of the disclosure, there is provided a computer program product comprising instructions, which when executed by the processor, causes the processor to perform the method 600 described with reference to FIG. 6.

### EXAMPLES

The filter device 100, 300, system 400 and method 600 for determining a loading parameter 420 indicative of the loading status of the filter element 110, herein disclosed are further illustrated in the following examples, which are provided by way of illustration and are not intended to be limiting the scope of the present disclosure.

### Pre-testing

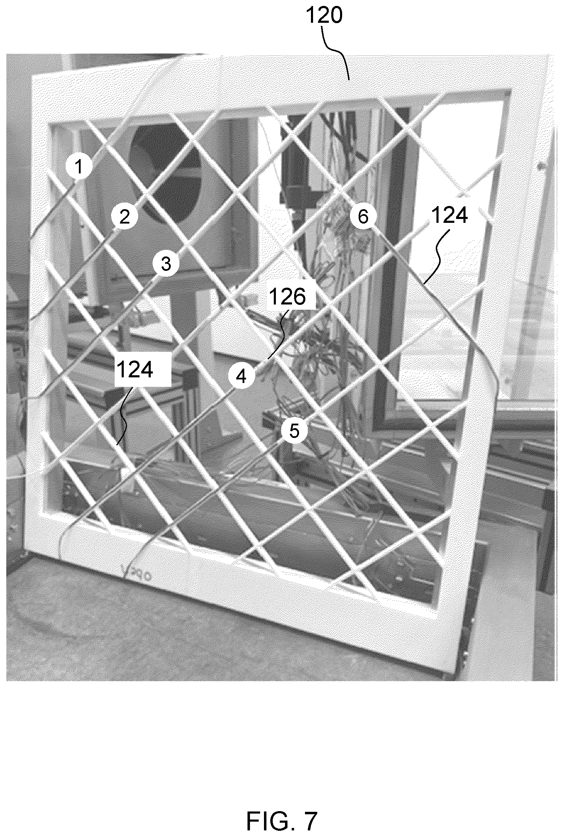

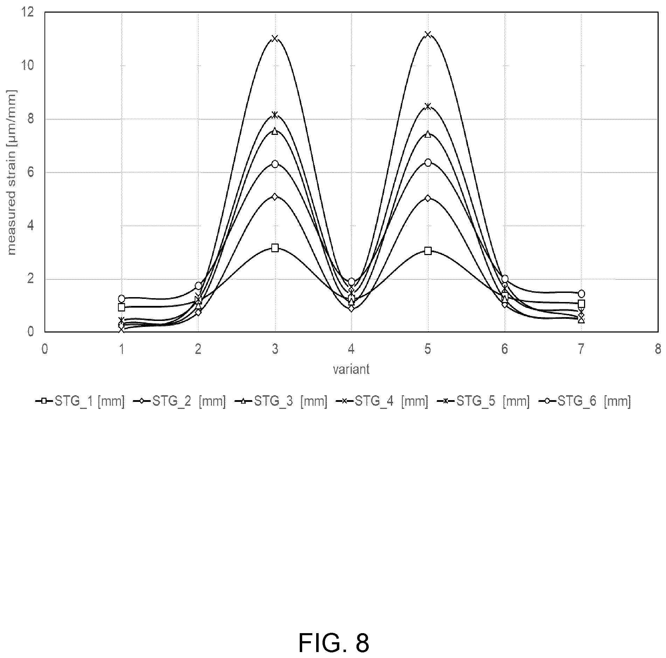

FIG. 7 shows a pictorial representation of a frame 120 having a plurality of sensors 130, for measuring an elongation of the respective frame rib 124 when varying loads are placed on the frame 120. In FIG. 7, the frame 120 may not include the filter element 110 and each of the plurality of sensors 130 may be attached at the various positions indicated by reference numerals #1 to #6. FIG. 8 shows the measured strain of each of the plurality of sensors 130, when the varying weights are placed on the frame 120.

In variants 1 and 7, no loads were placed on the frame 120. In variants 2, 4, and 6, a metal plate was placed at the center of the frame 120, and in variants 3 and 5, the metal plate and a 1 kg load were placed at the center of the frame 120.

Referring to FIG. 8, it was observed that the elongation of the respective frame rib 124 was highest at the center of the frame 120, i.e. at the position of the central frame rib 126 (see sensor 130 at positions #4 (STG_4), #5 (STG_5)), and decreases at the peripheral portions of the frame 120 (see sensors at positions #1 (STG_1), 2 (STG_2), 3 (STG_3), 6 (STG_6)).

### Testing with an unloaded filter element

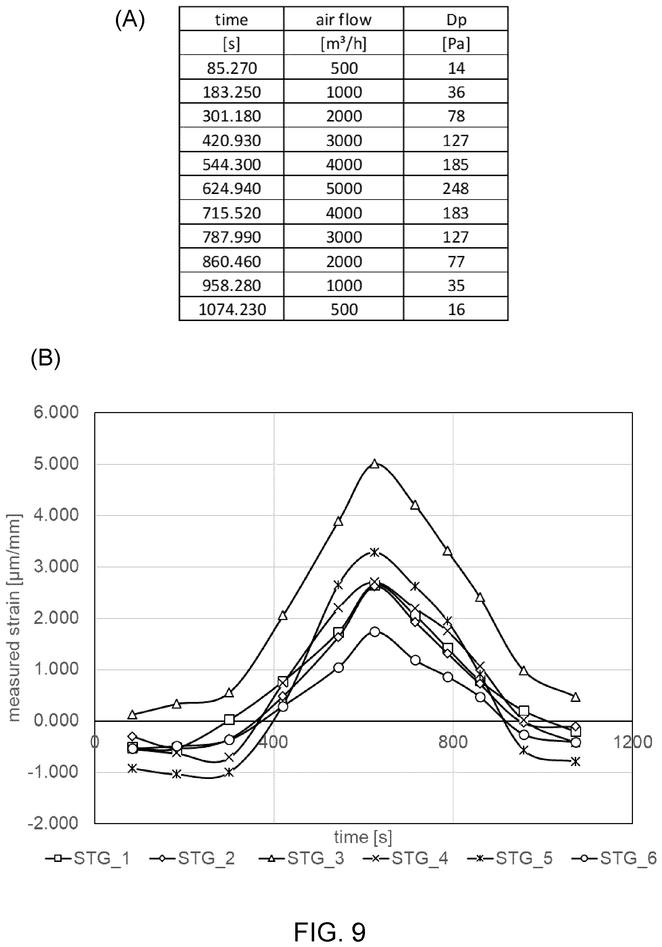

FIG. 9 shows (A) the test conditions of varying air flows on the frame 120 having the plurality of sensors 130, as shown in FIG. 7, and further including a first type of an unloaded filter element 110 housed therein; and (B) the measured strain of each of the plurality of sensors 130, at the varying air flows.

The elongation of the respective frame rib 124 or central frame rib 126 was measured by each of the plurality of sensors 130 attached at the various positions #1 to #6 (denoted as STG_1, STG_2, STG_3, STG_4, STG_5, STG_6, respectively, in FIG. 9B), at varying air flows. The differential pressure parameter, i.e. a pressure difference between an unfiltered air received on a side 112 and the filtered air released on the counter side 114, was also determined and is shown in FIG. 9A.

Referring to FIGS. 9A and 9B, a strong correlation between the increasing air flow, i.e. volume flow and/or differential pressure parameter and the elongation of the respective frame rib 124 or central frame rib 126 was observed.

### Comparison of measured strain of loaded and unloaded filter element

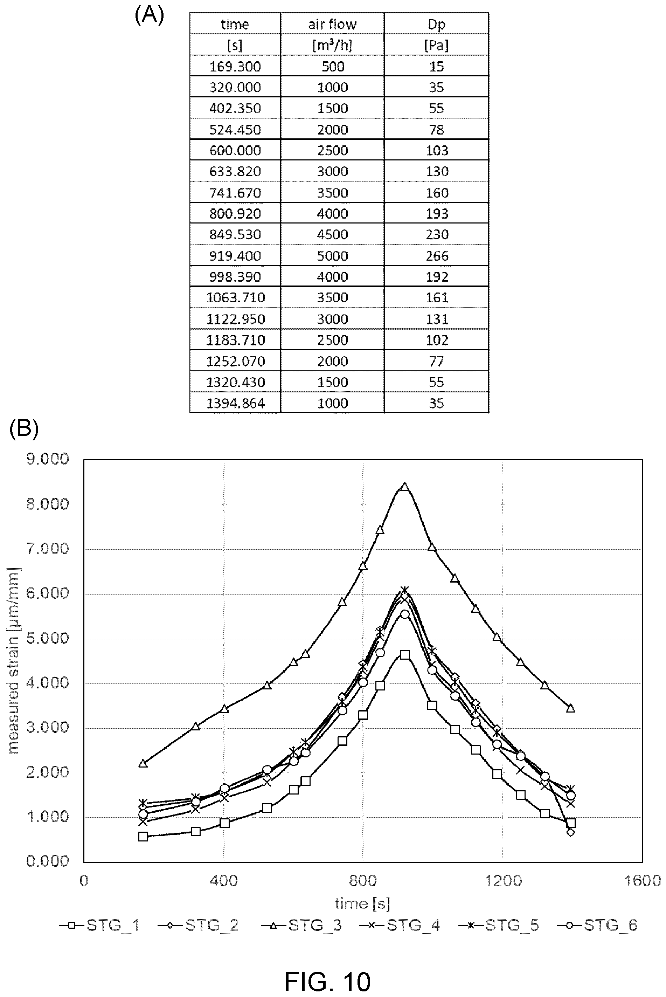

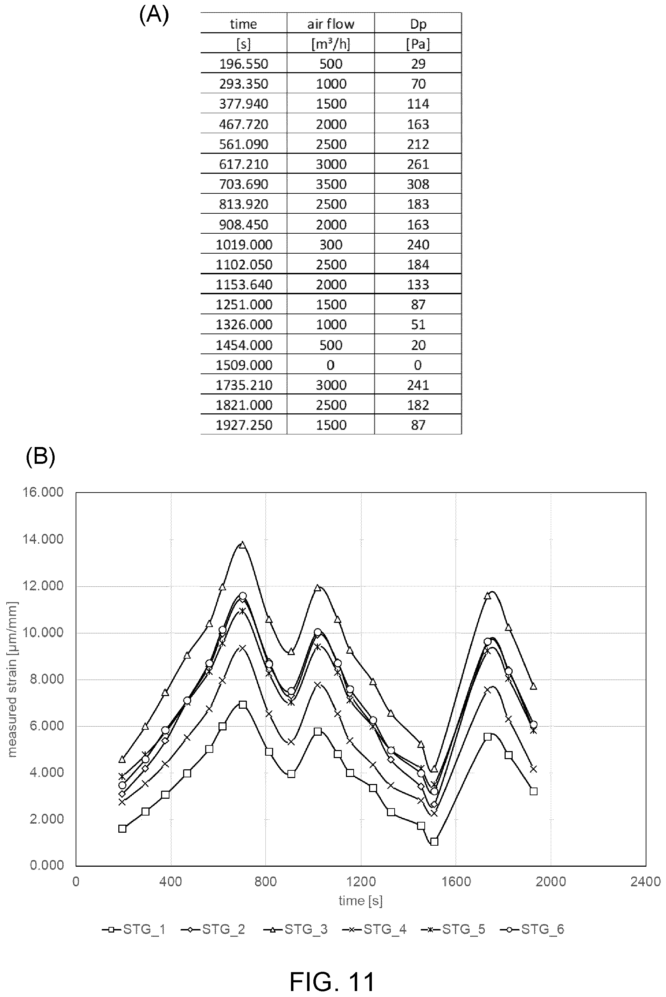

FIG. 10 shows (A) the test conditions of varying air flows on the frame 120 having the plurality of sensors 130, as shown in FIG. 7, and further including a second type of an unloaded filter element 110 housed therein; (B) the measured strain of each of the plurality of sensors 130, at the varying air flows, of the unloaded filter element 110. FIG. 11 shows (A) the test conditions of varying air flows on the frame 120 having the plurality of sensors 130, as shown in FIG. 7, and further including the second type of a loaded filter element 110 housed therein (B) the measured strain of each of the plurality of sensors 130, at the varying air flows, of the loaded filter element 110.

In the loaded condition, the filter element 110 was loaded with fine dust at an air flow of 3000 m³/h and at 300 Pa. The elongation of the respective frame rib 124 or central frame rib 126 was measured by each of the plurality of sensors 130 attached at the various positions #1 to #6 (denoted as STG_1, STG_2, STG_3, STG_4, STG_5, STG_6, respectively, in FIGS. 10B and 11B), at varying air flows. The differential pressure parameter, i.e. a pressure difference between an unfiltered air received on the side 112 and the filtered air released on the counter side 114, was also determined and are shown in FIGS. 10A and 11A, for the unloaded and loaded filter element 110, respectively.

Referring to FIGS. 10A to 11B, a strong correlation between the increasing air flow, i.e. volume flow and/or differential pressure parameter and the strain, e.g. elongation of the respective frame rib 124 or central frame rib 126 was observed, for both the unloaded and loaded filter element 110, respectively.

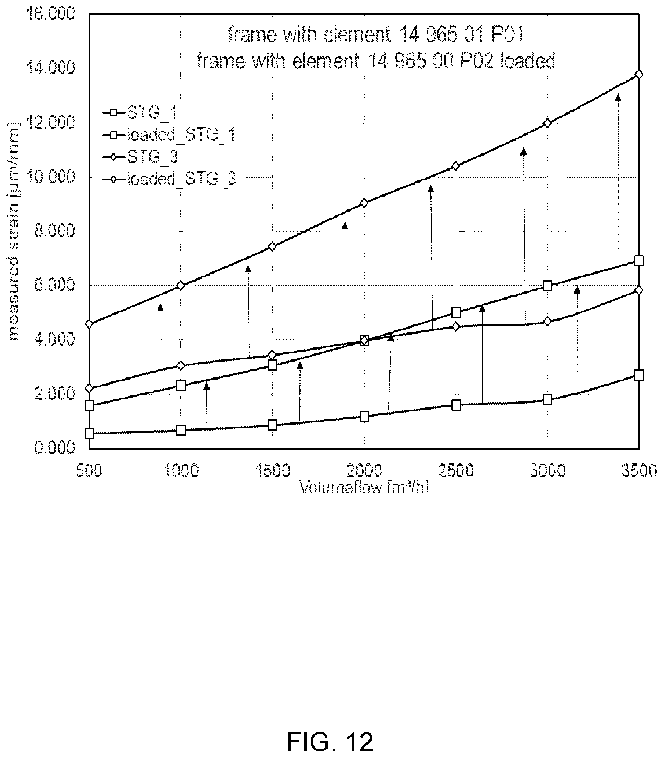

FIG. 12 shows a comparison of the measured strain from sensor 130 placed at positions #1 and #3, as shown in FIG. 7, between an unloaded filter element 110 and a loaded filter element 110. The unloaded and loaded filter element 110 may be of a same type, and in the loaded state, the filter element 110 may be loaded with fine dust at an air flow of 3000 m³/h and at 300 Pa.

As shown in FIG. 12, there is a discernable increase (see arrows) in measured strain of the unloaded filter element 110, when compared to a loaded filter element 110, for both sensors 130 at positions #1 (STG_1) and #3 (STG_3). It may therefore be seen, that it is possible to determine a difference in the loading of the filter element 110 in the unloaded and loaded states, based on the measured strain.

Embodiments of the disclosure thus provide an improved filter device for a vehicle, and/or a system comprising the improved filter device for determining the loading status of the filter element, in real-time or near real-time. The improved filter device comprises a sensor, such as a strain gauge, attached to a frame for housing the filter element, for acquiring sensor data indicative of a state of the frame, which is further correlatable with a loading status of the filter element. In various embodiments, the sensor and/or system may determine a frame parameter indicative of a change in the state of the frame, and correlates said frame parameter to a loading parameter indicative of the loading status of the filter element. Accordingly, the improved filter device and/or system comprising the improved filter device is able to determine, in real-time or near real-time, the loading status of the filter element, and to indicate to a user, the (i) change interval and/or (ii) replacement of a loaded filter element (which may be earlier than a maximum service lifetime of the filter element), and without adversely affecting the thermal management of the vehicle and/or battery charging time.

While the disclosure has been particularly shown and described with reference to specific embodiments, it should be understood by those skilled in the art that various changes in form and detail may be made therein without departing from the spirit and scope of the disclosure as defined by the appended claims. The scope of the disclosure is thus indicated by the appended claims and all changes which come within the meaning and range of equivalency of the claims are therefore intended to be embraced.

## Claims

1. A filter device (100) for a vehicle, the filter device (100) comprising a filter element (110) for filtering particles from unfiltered air;
a frame (120) for housing the filter element (110); and
a sensor (130) attached to the frame (120), the sensor (130) configured to acquire sensor data (402) indicative of a state of the frame (120);
wherein the sensor data (402) indicative of the state of the frame (120) is correlatable with a loading status of the filter element (110).

2. The filter device (100) of claim 1, wherein the state of the frame (120) comprises an elongation of the frame (120), and/or an elongation rate of the frame (120); and/or
wherein the frame (120) comprises: a frame border (122) surrounding a perimeter of the filter element; at least one frame rib (124) extending between a part of the frame border (122) and another part of the frame border (122); wherein the sensor is attached to the at least one frame rib (124).

3. The filter device (100) of claim 2, wherein the at least one frame rib (124) comprises a central frame rib (126) extending between the part of the frame border (122) and the another part of the frame border (122), to extend across a center portion of the filter element (110), and wherein the sensor (130) is attached to the central frame rib (126); and/or
wherein the at least one frame rib (124) comprises a first frame rib (124a) and a second frame rib (124b), and the sensor (130) comprises a first sensor (130a) and a second sensor (130b); wherein the first sensor (130a) is attached to the first frame rib (124a), and the second sensor (130b) is attached to the second frame rib (124b).

4. The filter device (100) of claim 3, further comprising a third sensor (130c) and a fourth sensor (130d), wherein the first sensor (130a) is attached to a first part of the first frame rib (124a), and the third sensor (130c) is attached to a third part of the first frame rib (124a); wherein the second sensor (130b) is attached to a second part of the second frame rib (124b), and the fourth sensor (130d) is attached to a fourth part of the second frame rib (124b); and/or
wherein a distance (d) between each frame rib (124) of a plurality of frame ribs (124) ranges from 5 cm to 10 cm, optionally, 7 cm to 8 cm.

5. The filter device (100) of any of claims 1 to 4, wherein the frame (120) comprises a plastic material, optionally, polypropylene; and/or
wherein the sensor (130) is attached to the frame (120) proximal to a side (112) for receiving the unfiltered air; and/or proximal to a counter side (114) for releasing filtered air; and/or
wherein the sensor (130) comprises a strain gauge, and wherein the sensor (130) optionally comprises a processor, the processor configured to:
obtain the sensor data (402) indicative of the state of the frame (120);
determine based on the sensor data (402), a frame parameter (410) indicative of the state of the frame (120);
determine based on the frame parameter (410), the loading parameter (420) indicative of the loading status of the filter element (110.

6. A system (400) for determining a loading parameter (420) indicative of the loading status of the filter element (110), the system (400) comprising the filter device (100) of any of claims 1 to 5, the sensor (130) of the filter device (100) arranged in data communication with a processor (404), the processor (404) configured to
obtain the sensor data (402) indicative of the state of the frame (120);
determine based on the sensor data (402), a frame parameter (410) indicative of the state of the frame (120);
determine based on the frame parameter (410), the loading parameter (420) indicative of the loading status of the filter element (110).

7. The system (400) of claim 6, wherein the frame parameter (410) is directly proportional to the loading parameter (420); and/or
wherein to determine the loading parameter (420), the processor (404) is configured to:
compare the frame parameter (410) against each of a plurality of reference frame parameters (412) indicative of a reference state of the frame (120), each reference frame parameter (412) correlated to a reference loading parameter (422) indicative of a reference loading status of the filter element (110);
determine whether the frame parameter (410) matches at least one reference frame parameter (412) of the plurality of reference frame parameters (412);
determine the loading parameter (420) as the reference loading parameter (422) correlated to the matched reference frame parameter (412) of the plurality of reference frame parameters (412).

8. The system (400) of claim 6 or 7, wherein the processor (404) is further configured to:
compare the loading parameter (420) with a pre-determined baseline (424) indicative of an allowable loading status of the filter element (110);
determine whether the loading parameter (420) is greater than or equal to the pre-determined baseline (424);
trigger a first alert (426) indicative of a first notification related to the allowable loading status of the filter element (110), in a positive determination that the loading parameter (420) is greater than or equal to the pre-determined baseline (424); and/or
wherein the processor (404) is further configured to:
compare the frame parameter (410) with a pre-determined sensor threshold (414) indicative of an operation limit of the sensor (130);
determine whether the frame parameter (410) is greater than or equal to the pre-determined sensor threshold (414);
trigger a second alert (416) indicative of a second notification related to the operation limit of the sensor (130), in a positive determination that the frame parameter (410) is greater than or equal to the pre-determined sensor threshold (414).

9. The system (400) of any of claims 6 to 8, wherein the frame parameter (410) indicative of the state of the frame (120) comprises: an elongation parameter indicative of an elongation of the frame (120); and/or an elongation rate parameter indicative of an elongation rate of the frame (120); and/or
wherein the loading parameter (420) indicative of the loading status of the filter element (110) comprises: a filter weight parameter indicative of a loaded weight of the filter element (110); and/or a differential pressure parameter indicative of a pressure difference between a first pressure of the unfiltered air received on the side (112) and a second pressure of the filtered air released from the counter side (114).

10. A method (500) of providing a filter device for a vehicle, the method comprising providing a filter element for filtering particles from unfiltered air (502);
providing a frame for housing the filter element (504);
attaching a sensor on to the frame, the sensor configured to acquire sensor data indicative of a state of the frame;
wherein the sensor data indicative of the state of the frame is correlatable with a loading status of the filter element (506).

11. A method (600) for determining a loading parameter indicative of the loading status of the filter element, the method comprising
providing the filter device of any one of claims 1 to 5 (602);
providing a processor arranged in data communication with the filter device (604), for executing the steps of:
obtaining the sensor data indicative of the state of the frame (606);
determining based on the sensor data, a frame parameter indicative of the state of the frame (608);
determining based on the frame parameter, the loading parameter indicative of the loading status of the filter element (610).

12. The method (600) of claim 11, wherein the frame parameter is directly proportional to the loading parameter; and/or
wherein determining, the loading parameter comprises:
comparing the frame parameter against each of a plurality of reference frame parameters indicative of a reference state of the frame, each reference frame parameter correlated to a reference loading parameter indicative of a reference loading status of the filter element;
determining whether the frame parameter matches at least one reference frame parameter of the plurality of reference frame parameters;
determining the loading parameter as the reference loading parameter correlated to the matched reference frame parameter of the plurality of reference frame parameters.

13. The method (600) of claim 11 or 12, wherein the processor further executes the steps of:
comparing the loading parameter with a pre-determined baseline indicative of an allowable loading status of the filter element;
determining whether the loading parameter is greater than or equal to the pre-determined baseline;
triggering a first alert indicative of a first notification related to the allowable loading status of the filter element, in a positive determination that the loading parameter is greater than or equal to the pre-determined baseline; and/or
wherein the processor further executes the steps of:
comparing the frame parameter with a pre-determined sensor threshold indicative of an operation limit of the sensor;
determining whether the frame parameter is greater than or equal to the pre-determined sensor threshold;
triggering a second alert indicative of a second notification related to the operation limit of the sensor, in a positive determination that the frame parameter is greater than or equal to the pre-determined sensor threshold.

14. The method (600) of any of claims 11 to 13, wherein the frame parameter indicative of the state of the frame comprises: an elongation parameter indicative of an elongation of the frame; and/or an elongation rate parameter indicative of an elongation rate of the frame; and/or
wherein the loading parameter indicative of the loading status of the filter element comprises: a filter weight parameter indicative of a loaded weight of the filter element; and/or a differential pressure parameter indicative of a pressure difference between a first pressure of the unfiltered air received on the first side and a second pressure of the filtered air released from the counter side.

15. A computer program product comprising instructions, which when executed by the processor, causes the processor to perform the method (600) of any of claims 11 to 14.
